(19) Europäisches Patentamt
European Patent Office
Office européen des brevets

(11) Numéro de publication: **0 089 272**
**B1**

(12) # FASCICULE DE BREVET EUROPEEN

(45) Date de publication du fascicule du brevet: **14.08.85**

(51) Int. Cl.⁴: **F 01 D 5/26**, F 01 D 5/30

(21) Numéro de dépôt: **83400463.2**

(22) Date de dépôt: **07.03.83**

(54) **Roue de rotor de turbine comportant un dispositif d'amortissement des vibrations d'aubes.**

(30) Priorité: **12.03.82 FR 8204154**

(43) Date de publication de la demande: **21.09.83 Bulletin 83/38**

(45) Mention de la délivrance du brevet: **14.08.85 Bulletin 85/33**

(84) Etats contractants désignés: **DE FR GB IT SE**

(56) Documents cités:
**FR - A - 2 324 873**
**FR - A - 2 413 542**
**US - A - 3 181 835**
**US - A - 3 455 537**
**US - A - 3 689 177**
**US - A - 3 887 298**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Bourguignon, Serge Pierre Louis 19, résidence, Montgermont Brinville Saint Sauveur sur Ecole, F-77930 Perthes en Gatinais (FR)**
Inventeur: **Choque, Raymond Roger, 3, allée des Bleuets, F-77850 Hericy (FR)**
Inventeur: **Pham, Lucien Paul, 233, avenue de la Libération, F-77350 Le Mee sur Seine (FR)**

(74) Mandataire: **Moinat, François, S.N.E.C.M.A. Service des Brevets Boîte Postale 81, F-91003 Evry Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



ACTORUM AG

## Description

La présente invention a pour objet une roue de rotor de turbine comportant un dispositif d'amortissement des vibrations d'aubes.

Les turbomachines présentant de hautes performances comportent des aubes de turbine haute pression qui sont en général verrouillées axialement sur un disque par deux flasques, cela pour éviter des perçages dans le disque et pour assurer l'étanchéité de l'air de refroidissement des aubes.

Il est déjà connu, par exemple par le brevet US-A N° 3181835, de créer, par l'action de la force centrifuge, une force d'appui radial centrifuge sous chaque pied d'aube. Mais cette disposition ne permet pas de réaliser, en fonctionnement, des frottements capables d'absorber l'énergie vibratoire.

Par ailleurs, suivant un mode de réalisation connu, par exemple par le brevet FR-A N° 2324873, le flasque avant constitué de secteurs est ancré entre des dents du disque et sous la jante de celui-ci. Le flasque arrière est constitué d'une seule pièce annulaire, ancrée sous la jante du disque et constituant un appui pour les pieds d'aubes et les dents du disque. Comme la longueur axiale du pied des aubes est affectée de tolérances, le flasque arrière ne porte pas sur toutes les aubes et il en résulte que certaines aubes peuvent vibrer dans leur logement et casser prématurément.

Une disposition d'un genre analogue est décrite par le brevet FR-A N° 2413542 qui prévoit, entre un flasque et chaque pied d'aube, une pièce qui, grâce aux jeux d'assemblage, peut pivoter sous l'action de la force centrifuge et prendre ainsi appui contre le pied d'aube. Mais, dans cette disposition, les efforts obtenus sont assez limités.

Le dispositif suivant l'invention a pour but de permettre d'assurer le contact de toutes les aubes avec le flasque arrière qui peut alors jouer son rôle d'organe amortisseur.

Conformément à la présente invention, entre le pied de l'aube et le fond de l'alvéole du disque, est disposée, derrière un premier flasque coopérant avec une face frontale du disque, et constituée de secteurs s'étendant et portant sur les faces frontales de deux pieds d'aubes au plus, une cale en forme de coin qui, sous l'action de la force centrifuge exerce sur l'aube un effort faisant coulisser celle-ci axialement afin qu'elle vienne en appui contre une première nervure annulaire ménagée sur la face interne d'un deuxième flasque coopérant avec la face frontale opposée du disque, constitué d'une seule pièce annulaire et formant flasque de retenue, ledit deuxième flasque ayant un centre de gravité situé de sorte qu'en fonctionnement, les forces centrifuges ont une résultante plaquant une deuxième nervure annulaire, de plus petit rayon que la première, sur le disque et les pieds d'aubes.

Cette disposition permet d'obtenir un effort de réaction du flasque qui amortit les vibrations des aubes.

D'autres caractéristiques et avantages de l'invention seront mieux compris à la lecture de la description qui va suivre d'un mode de réalisation et en se référant aux dessins annexés, sur lesquels:

– la fig. 1 est une vue en élévation et en coupe partielle d'un mode de réalisation du dispositif d'amortissement d'aubes suivant l'invention,

– la fig, 2 est une vue en coupe transversale de la cale montée entre le fond de l'alvéole du disque et le pied de l'aube,

– la fig. 3 est une vue en perspective de la cale en forme de coin.

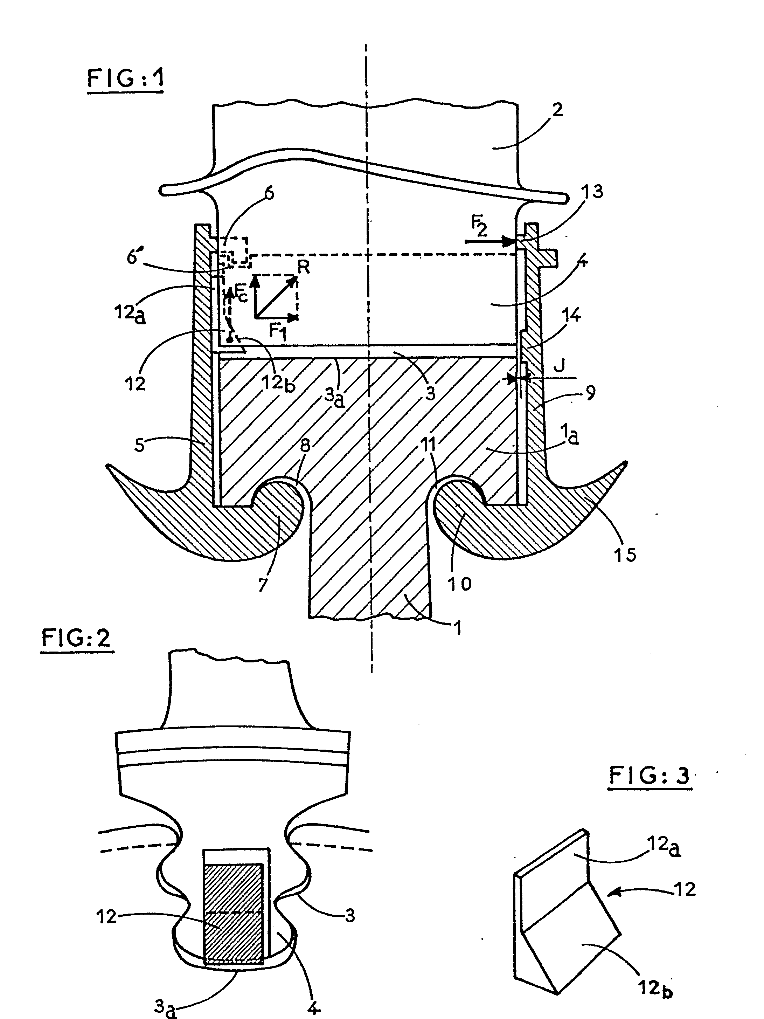

A la fig, 1, on a représenté une partie d'un disque 1 portant des aubes mobiles 2 d'une turbine, le disque 1 présentant des alvéoles 3 (fig. 2) dans lesquelles sont engagés et verrouillés radialement les pieds 4 des aubes 2. Sur la face avant du disque 1 est monté un flasque avant 5 qui comporte une bride 7 en direction du disque, bride qui est engagée dans une gorge circulaire 8 ménagée dans la périphérie interne de la partie 1a du disque. Ce flasque est constitué de secteurs s'étendant et portant sur les faces frontales de deux pieds d'aubes au plus. Chaque secteur comporte sur sa périphérie au moins un crochet 6 que l'on engage, au montage, entre deux dents du disque et que l'on fait glisser périphériquement d'un demi-pas dans une gorge 6' pratiquée à cet effet dans le sommet de chaque dent du disque.

Sur la face arrière du disque 1 est monté un flasque arrière 9 constitué d'une pièce annulaire formant une bague élastique fendue et ancrée par une bride circulaire 10 qui est engagée dans une gorge circulaire 11 ménagée dans la périphérie intérieure de la jante 1a du disque 1. Le verrouillage de ce flasque, engagé élastiquement sur la collerette délimitant la gorge 11, est assuré par une clé de verrouillage conforme à la demande de brevet publiée FR-A N° 2419389.

Entre le pied 4 de l'aube 2 et le fond 3a de l'alvéole 3 du disque est disposée une cale 12 en forme de coin (fig. 1, 2 et 3), ladite cale étant prolongée par une plaque 12a s'étendant entre le flasque avant et le pied de l'aube.

Sur la face interne du flasque arrière 9 coopérant avec la face frontale du disque sont prévues des nervures annulaires 13 et 14.

Lorsque le disque 1 est entraîné en rotation ainsi que les aubes 2, la force centrifuge Fc agit sur la cale 12 qui exerce sur le pied d'aube une force résultante R en raison de sa face inclinée 12b par laquelle elle est en contact avec le pied 4 de l'aube, ladite force résultante ayant une composante F1 qui s'exerce axialement sur le pied 4 de l'aube 2 et l'oblige à coulisser axialement dans son alvéole 3.

La face interne du flasque arrière 9 est usinée de manière à présenter, en l'absence de forces centrifuges, un jeu moyen J, de 0,3 mm par exemple, entre la nervure 14 et la face arrière de la jante 1a. En fonctionnement, les forces centrifuges ont une résultante située dans la zone 15 du centre de gravité du flasque 9, en arrière de la face aval du disque. Cet effort vient plaquer la nervure 14 sur le disque et/ou les pieds d'aubes.

Bien entendu, l'invention n'est pas limitative et l'homme de l'art pourra y apporter des modifications sans sortir pour cela du domaine de l'invention.

## Revendications

1. Roue de rotor de turbine comportant un dispositif d'amortissement des vibrations d'aubes dont les pieds sont engagés dans des alvéoles répartis sur le pourtour d'un disque sur lequel est ancré, sous la jante de celui-ci, un premier flasque coopérant avec une face frontale du disque, constitué de secteurs s'étendant et portant sur les faces frontales de deux pieds d'aubes au plus et un deuxième flasque, coopérant avec la face frontale opposée du disque, constitué d'une seule pièce annulaire, caractérisée en ce que, entre le pied (4) de l'aube (2) et le fond (3a) de l'alvéole (3) du disque (1) est disposée, derrière le premier flasque (5) une cale (12) en forme de coin qui, sous l'action de la force centrifuge, exerce sur l'aube (2) un effort faisant coulisser celle-ci axialement, afin qu'elle vienne en appui contre une première nervure (13) annulaire ménagée sur la face interne du deuxième flasque, ledit deuxième flasque ayant un centre de gravité situé de sorte qu'en fonctionnement, les forces centrifuges ont une résultante plaquant une deuxième nervure (14) annulaire, de plus petit rayon que la première, sur le disque et les pieds d'aubes.

2. Dispositif suivant la revendication 1, caractérisé en ce que la cale (12) en forme de coin est prolongée d'un côté par une plaque (12a) s'étendant entre le premier flasque (5) et le pied (4) de l'aube (2).

## Patentansprüche

1. Turbinenrotor mit Schwingungsdämpfer für die Turbinenschaufeln, wobei die Schaufelfüsse mit am äusseren Umfang einer Scheibe verteilt angeordneten Zellräumen im Eingriff stehen, mit einer unter dem Felgenkranz der Scheibe verankerten und mit einer von deren Stirnseiten zusammenwirkenden ersten Flanschscheibe, die aus sich erweiternden Sektoren besteht, welche jeweils auf den Stirnseiten von höchstens zwei Schaufelfüssen aufliegen, sowie mit einer unter dem Felgenkranz der Scheibe verankerten und mit deren entgegengesetzter Stirnseite zusammenwirkenden zweiten Flanschscheibe, die aus einem einzigen ringförmigen Teil besteht, dadurch gekennzeichnet, dass zwischen dem Schaufelfuss (4) und dem Boden (3a) des Zellraums (3) der Scheibe (1) hinter der ersten Flanschscheibe (5) ein keilförmiger Block (12) angeordnet ist, der unter der Wirkung der Zentrifugalkraft einen Druck auf die Schaufel (2) ausübt, durch den letztere axial verschoben wird, derart, dass sie sich an einer an der Innenseite der zweiten Flanschscheibe vorgesehenen ersten ringförmigen Rippe (13) abstützt, und dass der Schwerpunkt der zweiten Flanschscheibe derart gelegen ist, dass die resultierende der beim Betrieb auftretenden Zentrifugalkräfte eine an der Innenseite der zweiten Flanschscheibe ausgebildete zweite ringförmige Rippe (14) mit gegenüber der ersten Rippe kleinerem Radius auf die Scheibe und die Schaufelfüsse drückt.

2. Turbinenscheibe nach Anspruch 1, dadurch gekennzeichnet, dass der keilförmige Block (12) sich auf einer Seite in einer Platte (12a) verlängert, die sich zwischen der ersten Flanschscheibe (5) und dem Schaufelfuss (2) erstreckt.

## Claims

1. Turbine rotor comprising a damping arrangement for the turbine blades, the roots of which are engaged in slots distributed over the periphery of a disc on which, below the rim thereof, is anchored a first side support member co-operating with a front face of the disc, consisting of segments extending and bearing over the front faces of at most two blade roots and a second side support member, co-operating with the opposite front face of the disc, consisting of only one annular member, characterised in that a wedge-shaped member (12) is disposed between the root (4) of the blade (2) and the bottom (3a) of the slot (3) in the disc (1), and behind the first side support member (5), which wedge-shaped member (12), under the action of the centrifugal force, exerts on the blade (2) a force causing the latter to slide axially so that it bears against a first annular rib (13) provided on the inside face of the second side support member, the said second side support member having a centre of gravity which is so located that in operation the centrifugal forces have a resultant which applies a second annular rib (14), which is of smaller radius than the first, against the disc and the roots of the blades.

2. Arrangement according to Claim 1, characterised in that the wedge-shaped member (12) is extended on one side by a plate (12a) extending between the first side support member (5) and the root (4) of the blade (2).

FIG:1
2
6
13
F2
6'
R
4
12a
Fc
F1
14
12
12b
3a
3
J
9
5
8
11
1a
7
10
15
1
FIG:2
12
3
3a
4
FIG:3
12a
12
12b